# EUROPEAN PATENT SPECIFICATION

(11) **EP 2 803 653 B1**
(45) Date of publication and mention of the grant of the patent: **12.10.2016**
(21) Application number: 13167400.4
(22) Date of filing: 13.05.2013
(51) Int. Cl.: C07B 59/00, C07F 13/00

(54) **An automated synthesis device to produce Re-188-Liposome and method thereof**
Eine automatisierte Synthese Gerat an Re-188-Liposomen zu erzeugen und das Verfahren
Dispositif de synthèse automatisé pour produire Re-188-liposome et de la méthode

(43) Date of publication of application: 19.11.2014
(73) Proprietor: Institute of Nuclear Energy Research, Atomic, 325 Taoyuan (TW)
(72) Inventor: Chiu, Shu-Pei, Taoyuan 325 (TW); Li, Ming-Hsin, Taoyuan 325 (TW); Chang, Chih-Hsien, Taoyuan 325 (TW); Li, Te-Wei, Taoyuan 325 (TW)
(74) Representative: Lermer, Christoph

(56) References cited:
- US-A1- 2011 097 263

## Description

### BACKGROUND OF THE INVENTION

### 1. Field of the invention

The present invention relates to an automated synthesis device and method to produce Re-188-Liposome (rhenium-188-liposome), and more particularly to synthesis of rhenium-188-liposome using automated synthesis devices to obtain Liposome encapsulated rhenium-188 for the purpose of accumulation of medicine in parts of tumors to improve therapeutic effect of nuclear medicine.

### 2. Description of related Art

The artificial radioisotope Re-188 with half-life of 16.9 hours has been proved its enhanced permeability and retention (Enhanced Permeability and Retention, EPR) effect for accumulating in specific tumor tissue, transferring radioactive NANO-medicine to the tumor cell angiogenesis, blocking the path of the supply of nutrients and releasing rhenium-188 beta rays to kill cancer cells to achieve the purpose of cancer treatment. Also, it is confirmed to be effective for treatments of tumor metastases in animal experiments, including colon cancer, lung metastases and ascites metastases of colorectal cancer in tumors transfer mode.

Rhenium-188-Liposome as a metastatic tumor medicine treatment and diagnosis draws a high degree of attention recently. Liposome has a structure of phospholipid bilayer having same composition as cell membranes, good biocompatibility, and capable of decomposition in vivo. Liposome has a particle size between tens of nanometers (nm) to tens of microns (um), when the liposome enters the vessel of human body, because of the small gap of vascular endothelial cell of normal blood vessel tissues, the liposome is not able to enter; but tumor angiogenesis in vascular endothelial cell has relative large gap and due to effect of EPR (Enhanced Permeability and Retention) the liposome is able to enter through gap into the tumor vascular cell, allowing mass liposome accumulation at the tumor site to enhance medications efficiency. Rhenium-188 nuclide can be embedded in the liposome by chelating agent BMEDA for developing radioactive NANO medicine a rhenium-188 lipsome (Re-188-Liposome). Rhenium-188 is a radioisotope capable of diagnosis and treatment with its suitable half-life (16.9 hours), and can radiate 155 thousand electron volts (keV) gamma rays for nuclear medicine diagnostic imaging applications, and also it can release beta energy up to 2.12 million electron volts (MeV) suitable for use as nuclear medicine treatment of cancer. This characteristic of Re-188 nuclides has triggered research in the aspect of application for imaging diagnosis and treatment of tumors.

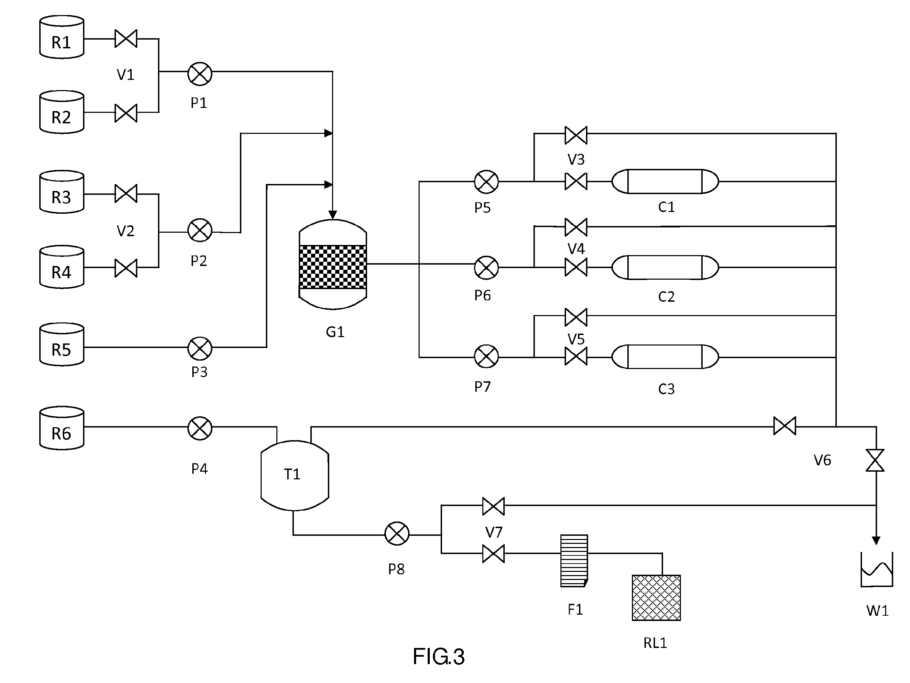

Conventional synthesis method of Rhenium-188-Liposome medicine for diagnosis and treatment is achieved in manual. In the prior art US 2011/097263, Hsu Wei-Chuan et al., it discloses a manual procedure for the production of Re-188-BMEDA liposome complex. The difference of the subject matter of the present application and the prior art is the entire setup as depicted in Figure 3 of the present application, which is claimed in claim 1, as compared to the rather easy setup of the cited prior art. A skilled person would not arrive at the subject matter of the present application as he would not find an incentive in the prior art or elsewhere in the prior art to replace the manual procedure by an automated procedure, because the prior art fails to disclose or hint at an automated device for such a process. Other conventional method includes first conveying the rhenium-188 eluent directly into the reaction vial, heating the reaction solvent, importing into the pre-treated PD-10 gel filtration column to proceed with manual purification, and followed by pharmacokinetic studies and clinical assessment. Besides rhenium-188-Liposome labeling accomplished with manually operational method, other automatic labeling hardware includes process flow, structure, layout and arrangement are still having rooms for improvement to provide a unique and complete functionality. In the part of software, there is still remained high degree of manipulation complexity and bulk software in operation. Without proper improvement of above drawbacks may result in reduced yield and waste of resources.

### SUMMARY OF THE INVENTION

The main objective of the present invention is to provide an automated synthesis method for Rhenium-188-Liposome, including four stages in order, namely, labeling reaction, embedding reaction, separation and purification, and medication filtration. The automated synthesis method and its operational process for Rhenium-188-Liposome include hardware and software, but in the traditional automatic synthesis box for labeling, the software is usually attached to and controlled by other equipments. The automated synthesis device to produce Re-188-Liposome of the present invention aims to replace the traditional automatic synthesis box for labeling, which is attached to other equipments, with an one-touch or one-button press control. When the customized labeling process is in place, the process control software is burnt into a chip for compactness for the control process. The improvement of the control process can solve problems of complexity and bulk software adherent to the traditional manipulation process.

Another objective of the present invention is to provide an automated synthesis device, including the configuration of each unit module required to accomplish the reactions with the automated synthesis method of the present invention. The reactions include labeling, embedding, separation purification, and medication filtration in four stages. The reactions are processed with an automatic operation controlled by a computer software burn in-chip. To use the automated synthesis device of the present invention, it only needs to place the medications for reaction into specific reaction vial, turn on power to activate the operating system, and the preparation of the medication can be completed in a short time for clinic diagnosis and treatment.

### BRIEF DESCRIPTION OF THE DRAWINGS

Fig. 1 is a block diagram of the production of Re-188-BMEDA solution of the present invention;
Fig. 2 is schematic diagram showing a preferred embodiment of synthesis method of Re-188-BMEDA solution of the present invention, and
Fig. 3 is schematic diagram showing a preferred embodiment of synthesis device to produce Re-188-BMEDA solution of the present invention.

### Detailed Description of the Preferred Embodiment

The present invention relates to a metastatic tumor medicine treatment and diagnosis to provide an automated synthesis device and method to produce Rhenium-188-Liposome.

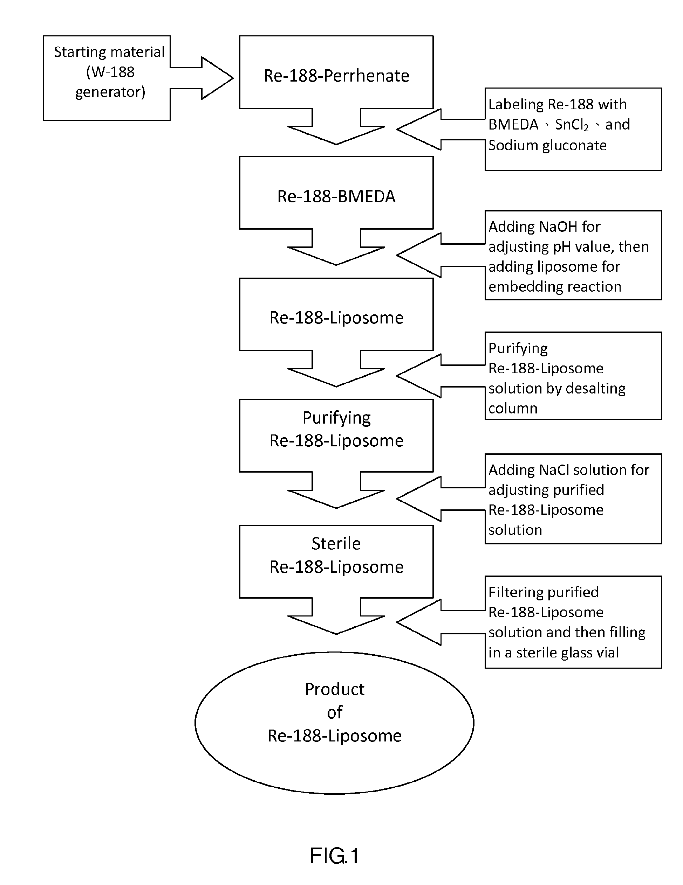

In Fig. 1, a block diagram showing the production of Re-188-BMEDA solution of the present invention includes four stages, comprising steps:
First stage: Labeling reaction
   Step 1a: Charging 0.68M sodium gluconate containing 10% glacial acetic acid solution, N, N-bis (2-mercapto ethyl) - N', N'-diethylethylenediamine, referred to as BMEDA, and the solution of stannous chloride (SnCl2) with 10 mg/m modulation ratio into reaction vial G1, and then adding Re-188 solution with radioactivity of approximately 65mCi ~ 470mCi to the reaction vial G1 from the first reagent vial R1, the reaction taking place at temperature about 80 ° C with a stirrer rotating at speed 100~500 rpm to complete the reaction in the reaction vial G1, and the labeling reaction is accomplished with the solution of rhenium-188-BMEDA.
Second stage: Embedding reaction
   Step 2a: adding sodium hydroxide from the second reagent vial R2 to reaction vial G1, mixing with rhenium-188-BMEDA solution obtained in step 1a, and stirring the vial G1 with a stirrer rotating at speed 100~500 rpm to assure uniformity of mixing.
   Step 2b: adding liposome from third reagent bottle R3 to the reaction vial in G1, heating the reaction vial G1 to about 60°C and stirring the reaction vial G1 with a stirrer rotating at speed 100~500 rpm.
   Step 2c: After completion of the reaction, placing the reaction vial G1 at room temperature environment for cooling and the 188Re - Liposome solution is obtained.
Stage 3: Separation and purification
   Step 3a: first using 0.9% sodium chloride injection for washing first to third PD-10 gel filtration column C1 - C3, respectively.
   Step 3b: adding an equal amount of rhenium-188-liposome solution from the reaction vial G1 to each of PD-10 gel filtration column C1 - C3, respectively, and after the Re-188-liposome solution is completely discharged out of each of the PD-10 gel filtration column C1 - C3, then adding an equal volume of 0.9% sodium chloride injection to each of PD-10 gel filtration column C1 - C3 from the fourth reagent vial R4, respectively, and subject to the sodium chloride solution is fully discharged as waste solution, conveying the waste solution into waste vial W1 through the sixth solenoid valve V6.
   Step 3c: after the waste solution being completely discharged, adding an equal volume of 2.5mL of 0.9% sodium chloride injection to each of PD-10 gel filtration column C1 - C3 from the fifth reagent vial R5, respectively.
   Step 3d: conveying the discharged about 7.55mL sodium chloride injection through sixth solenoid valve V6 into temporary storage vial T1 to complete the process of separation and purification.
Stage 4: medication and filtration
   Step 4a: adding 6.5mL of 0.9% sodium chloride injection from sixth reagent vial R6 through fourth pump P4 to the temporary storage vial T1 to mix with the solution obtained in Step 3d.
   Step 4b: filtering the solution about 14mL obtained from step 4a through micro pump P8, solenoid valve V7, and a sterile membrane F1 of thickness about 0.2µm, and filling in a sterile glass product vial RL1 as a finished product of rhenium-188-Liposome.

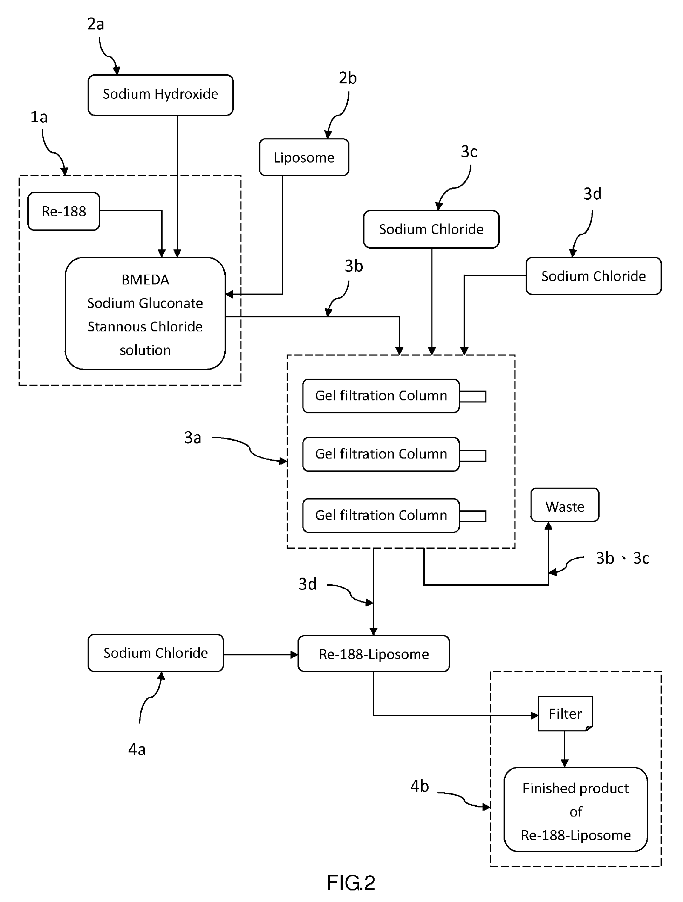

In Fig. 2, a preferred embodiment of automated synthesis method to produce rhenium-188-BMEDA solution is shown, at least comprising steps:
Stage 1: Labeling reaction
   Step 1a: charging 77µL of 0.68M sodium gluconate containing 10% glacial acetic acid solution , 3.08mg of N, N-bis (2-mercapto ethyl) - N', N'-diethylethylenediamine, referred to as BMEDA, and 74µL solution of stannous chloride (SnCl2) with 10mg/mL modulation ratio into reaction vial G1, and adding nitrogen or helium gas into solution flow paths of micro pumps for pressure regulation, then adding Re-188 solution (radioactivity of approximately 65mCi ~ 470mCi) from the first reagent vial R1 to the reaction vial G1, the reaction taking place at temperature about 80 ° C with a stirrer rotating at speed 100~500 rpm to complete the reaction in the reaction vial G1, and the labeling reaction is accomplished with the solution of rhenium-188-BMEDA obtained. Second stage: Embedding reaction
   Step 2a: adding 55µL of equivalent concentration 2N sodium hydroxide from the second reagent vial R2 to reaction vial G1, mixing with rhenium-188-BMEDA solution obtained in step 1a, and stirring the vial G1 with a stirrer rotating at speed 100~500 rpm to assure uniformity of mixing.
   Step 2b: adding 5mL of liposome from third reagent bottle R3 to the reaction vial in G1, heating the reaction vial G1 to about 60 ° C and stirring the reaction vial G1 with a stirrer rotating at speed 100~500 rpm for 30 minutes to assure uniformity of mixing.
   Step 2c: After completion of the reaction, placing the reaction vial G1 at room temperature environment for cooling about 10 minutes, and about 6 ml of 188Re - Liposome solution can be obtained.
Stage 3: Separation and purification
   Step 3a: first using 20mL of 0.9% sodium chloride injection for washing first to third PD-10 gel filtration column C1, C2, C3, respectively.
   Step 3b: adding an equal amount of 2mL of rhenium-188-liposome solution from the reaction vial G1 to each of PD-10 gel filtration column C1, C2, C3, respectively, and after about 6mL of the Re-188-liposome solution is completely discharged out of each of the PD-10 gel filtration columns, then adding an equal volume of 1mL of 0.9% sodium chloride injection to each of PD-10 gel filtration column C1, C2, C3 from the fourth reagent vial R4, respectively, then subject to an amount of 3mL of the sodium chloride solution being fully discharged as waste solution, conveying the waste solution into waste vial W1 through sixth solenoid valve V6.
   Step 3c: after the waste solution being completely discharged, adding an equal volume of 2.5mL of 0.9% sodium chloride injection to each of PD-10 gel filtration column C1, C2, C3 from the fifth reagent vial R5, respectively.
   Step 3d: conveying the discharged about 7.5mL sodium chloride injection through the sixth solenoid valve V6 into temporary storage vial T1 to complete the process of separation and purification.
Stage 4: medication and filtration
   Step 4a: adding 0.9% sodium chloride injection from sixth reagent vial R6 to a temporary storage vial T1 to mix with the solution obtained in Step 3d.
   Step 4b: filtering the solution obtained from step 4a through micro pump P8 and a sterile membrane F1, and then filling in a sterile glass vial RL1 as a finished product of rhenium-188-Liposome.

In Fig. 3, a schematic diagram showing a preferred embodiment of synthesis device to produce Re-188-BMEDA solution of the present invention, at least comprising constituent elements: the first to sixth reagent vials R1-R6, the first to seventh three-way solenoid valve V1 -V7, the first to third PD-10 gel filtration column C1-C3, the first to eighth micro pump P1-P8, a reaction vial G1, a product vial RL1, a temporary storage vial T1, a filter membrane F1, and a waste vial W1, wherein each element are connected to electric circuit through micro-channel, and controlled with programmable chip to let fluid flow from the reagent vials into the reaction vials in a sequence for reaction through solenoid valves.

The first reagent vial R1 and second reagent vial R2 are being connected to the first solenoid valve V1, and then connected to the reaction vial G1 through the first micro pump P1.

The third reagent vial R3 and fourth reagent vial R4 are being connected to the second solenoid valve V2, respectively, and then connected to the reaction vial G1 through the second micro pump P2. The fifth reagent vial R5 is being connected to the reaction vial G1 through the third micro pump P3. The sixth reagent vial R6 is being connected to the temporary storage vial T1 through the fourth micro pump P4.

The reaction vial G1 is being connected to the micro-pump P5-P7and the micro-pump P5-P7 are connected to each of PD-10 gel filtration column C1-C3 through the solenoid valve V3-V5, respectively; and each of PD-10 gel filtration column C1 to C3 is connected to the temporary storage vial T1 and waste vial W1 through the sixth solenoid valve V6, respectively, and the temporary storage vial T1 is connected to micro pump P8 and to the waste vial W1 and filter membrane F1 through the seventh solenoid valves V7, respectively, and the filter membrane F1 is connected to a sterile glass product vial RL1.

The foregoing invention has been described in detail by way of illustration and example for purposes of clarity and understanding.

## Claims

1. An automated synthesis device to produce Re-188-BMEDA solution, at least comprising constituent elements: a plurality of reagent vials, three-way solenoid valves, gel filtration columns, micro pumps, a reaction vial, a sterile glass product vial, a temporary storage vial, a filter membrane, and a waste vial, wherein the plurality of vials include first reagent vial R1 and second reagent vial R2 being connected to the reaction vial G1 through first micro pump P1, third reagent vial R3 and fourth reagent vial R4 being connected to the reaction vial G1 through second micro pump P2, fifth reagent vial R5 being connected to the reaction vial G1 through third micro pump P3; and sixth reagent vial R6 being connected to the temporary storage vial T1 through fourth micro pump P4; wherein the reaction vial G1 is connected to gel filtration columns C1-C3 through fifth to seventh micro-pumps P5-P7 and third to fifth solenoid valves V3-V5, respectively; wherein each of the gel filtration columns C1-C3 is connected to the temporary storage vial T1 and waste vial W1 through sixth solenoid valve V6, and wherein the temporary storage vial T1 is connected to eighth micro pump P8 and then to the waste vial W1 and filter membrane F1 through seventh solenoid valve V7, respectively, and wherein the filter membrane F1 is connected to a sterile glass product vial RL1.

2. The automated synthesis device to produce Re-188-BMEDA solution of claim 1, wherein each element is being connected to electric circuit through micro-channel, and controlled with program built-in chip through one-touch button to let fluid flow from the reagent vials into reaction vials for reaction in a sequence through solenoid valves.

3. The automated synthesis device to produce Re-188-BMEDA solution of claim 1, wherein the first to seventh solenoid valves are three-way solenoid valve.

4. The automated synthesis device to produce Re-188-BMEDA solution of claim 1, wherein the gel filtration columns is PD-10 column.

5. A method of using the automated synthesis device to produce Re-188-BMEDA solution of claim 1, comprising steps:
Step 1a: Charging 77µL of 0.68M sodium gluconate containing 10% glacial acetic acid solution, about 3.08mg of N, N-bis (2-mercapto ethyl) - N', N'-diethylethylenediamine, referred to as BMEDA, and 74µL of solution of stannous chloride (SnCl2) with 10mg/mL modulation ratio into reaction vial G1, and followed by adding nitrogen or helium gas into solution flow paths of micro pumps for pressure regulation, adding 0.9mL of Re-188 solution with radioactivity of approximately 65mCi ~ 470mCi to the reaction vial G1 from first reagent vial R1 through micro pump P1, and a reaction taking place at temperature about 80 ° C with a stirrer rotating at speed 100~500 rpm for 60 minutes to complete the reaction in the reaction vial G1, and a labeling reaction is accomplished with 1.05mL of the solution of rhenium-188-BMEDA obtained;
Step 2a: adding sodium hydroxide from second reagent vial R2 to the reaction vial G1 through micro pump P1, mixing with the rhenium-188-BMEDA solution obtained in step 1a, and stirring the vial G1 with a stirrer rotating at speed 100~500 rpm to assure uniformity of mixing;
Step 2b: adding 5mL of liposome from third reagent bottle R3 through micro pump P2 to the reaction vial in G1, heating the reaction vial G1 to about 60 ° C and stirring the reaction vial G1 with a stirrer rotating at speed 100~500 rpm for 30 minutes;
Step 2c: After completion of the reaction, placing the reaction vial G1 at room temperature environment for cooling about 10 minutes, and 188Re - Liposome solution is obtained;
Step 3a: first using 20mL of 0.9% sodium chloride injection through micro pump P5-P7 for washing first to third PD-10 gel filtration columns C1-C3, respectively;
Step 3b: adding an equal amount of rhenium-188-liposome solution through micro pumps P5-P7 from the reaction vial G1 to each of PD-10 gel filtration columns C1-C3, respectively, and after about 6mL of the Re-188-liposome solution is completely discharged out of each of the PD-10 gel filtration column C1- C3, then adding an equal volume of 1mL of 0.9% sodium chloride injection from fourth reagent vial R4 through micro pump P5-P7 to each of PD-10 gel filtration column C1-C3 , respectively, then subject to an amount of 3mL of the sodium chloride solution is fully discharged as waste solution, conveying the waste solution into waste vial W1 through sixth solenoid valve V6;
Step 3c: after the waste solution being completely discharged, adding an equal volume of 2.5mL of 0.9% sodium chloride injection from fifth reagent vial R5 through micro pumps P5-P7 to each of PD-10 gel filtration column C1-C3, respectively;
Step 3d: conveying the discharged about 7.5mL of sodium chloride injection through the sixth solenoid valve V6 into temporary storage vial T1 to complete the process of separation and purification;
Step 4a: adding 6.5mL of 0.9% sodium chloride injection from sixth reagent vial R6 through micro pump P4 to a temporary storage vial T1 to mix with the solution obtained in Step 3d;
Step 4b: filtering the solution obtained from step 4a through micro pump P8 and solenoid valve V7 and sterile membrane F1, and then filling in a sterile glass vial RL1 as a finished product of rhenium-188-Liposome.

## Patentansprüche

1. Automatisierte Synthesevorrichtung um Re-188-BMEDA Lösung herzustellen, die zumindest folgende Bestandteile enthält: eine Vielzahl von Reagenzgläsern, Drei-Wege-Magnetventile, Gelfiltrationssäulen, Mikropumpen, ein Reaktionsgefäß, ein steriles Reagenzglas aus Glas, ein Reagenzglas für zeitweilige Aufbewahrung, eine Filtermembran und ein Reagenzglas für Abfälle, wobei die Vielzahl der Gläser ein erstes Reagenzglas R1 und ein zweites Reagenzglas R2 umfasst, die mit dem Reaktionsgefäß G1 durch die erste Mikropumpe P1 verbunden sind, das dritte Reagenzglas R3 und das vierte Reagenzglas R4 sind mit dem Reaktionsgefäß G1 durch die zweite Mikropumpe P2 verbunden, das fünfte Reagenzglas R5 ist mit dem Reaktionsgefäß G1 durch die dritte Mikropumpe P3 verbunden; und das sechste Reagenzglas R6 ist mit dem Reagenzglas für zeitweilige Aufbewahrung T1 durch die vierte Mikropumpe P4 verbunden; wobei das Reaktionsgefäß G1 mit den Gelfiltrationssäulen C1-C3 durch die fünften bis siebten Mikropumpen P5 bis P7 bzw. die dritten bis fünften Magnetventile V3-V5 verbunden ist; wobei jede der Gelfiltrationssäulen C1-C3 mit dem Reagenzglas für zeitweilige Aufbewahrung T1 und dem Reagenzglas für Abfälle W1 durch das sechste Magnetventil V6 verbunden ist, und wobei das Reagenzglas für zeitweilige Aufbewahrung T1 mit der achten Mikropumpe P8 verbunden ist, und dann mit dem Reagenzglas für Abfälle W1 und der Filtermembran F1 jeweils durch das siebte Magnetventil V7, und wobei die Filtermembran F1 mit einem sterilen Reagenzglas aus Glas RL1 verbunden ist.

2. Automatisierte Synthesevorrichtung zur Herstellung von Re-188-BMEDA Lösung nach Anspruch 1, wobei jedes Element durch Mikrokanal mit der elektrischen Schaltung verbunden wird, und mit einem in das Programm eingebauten Chip mittels One-Touch-Taste kontrolliert wird, um Fluid für eine Reaktionsfolge aus den Reagenzgläsern in Reaktionsgefäße durch Magnetventile fließen zu lassen.

3. Automatisierte Synthesevorrichtung zur Herstellung von Re-188-BMEDA Lösung nach Anspruch 1, wobei die ersten bis siebten Magnetventile Drei-Wege -Magnetventile sind.

4. Automatisierte Synthesevorrichtung zur Herstellung von Re-188-BMEDA Lösung nach Anspruch 1, wobei die Geltiltrationssäulen PD-10-Säulen sind.

5. Verfahren zur Verwendung der automatisierten Synthesevorrichtung zur Herstellung von Re-188-BMEDA Lösung nach Anspruch 1 zu benutzen, folgende Schritte umfassend:
Schritt 1a: Es werden 77µL von 0,68m Natriumgluconat, die 10% Eisessigsäure-Lösung enthalten, etwa 3.08mg von N, N-bis (2-Mercapto-Ethyl) - N ', N'-Diethylethylendiamin, bezeichnet als BMEDA, und 74µL Lösung von Zinn-IIchlorid (SnC12) mit 10 mg / ml Modulationsverhältnis in das Reaktionsgefäß G1 gefüllt, gefolgt von der Zugabe von Stickstoff oder Heliumgas in die Lösungsströmungswege der Mikropumpen zur Druckregelung, Zugabe von 0,9 ml Re-188-Lösung mit Radioaktivität von etwa 65mCi ~ 470mCi in das Reaktionsgefäß G1 vom ersten Reagenzglas R1 durch Mikropumpe P1, und einer Reaktion bei einer Temperatur von etwa 80 ° C mit einem sich bei einer Geschwindigkeit von 100 ~ 500 Umdrehungen pro Minute für 60 Minuten drehenden Rührwerk, um die Reaktion in dem Reaktionsgefäß G1 zu vervollständigen, und eine Markierungsreaktion wird mit 1,05 ml der Lösung des gewonnenen Rhenium-188-BMEDA durchgeführt;
Schritt 2a: Zugabe von Natriumhydroxid aus dem zweiten Reagenzglas R2 in das Reaktionsgefäß G1 durch Mikropumpe P1, Vermischten mit der Rhenium-188-BMEDA Lösung aus Schritt 1a, und Rühren des Gefäßes G1 mit einem Rührwerk, das bei einer Geschwindigkeit von 100 ~ 500 Umdrehungen pro Minute rotiert, um die Gleichförmigkeit des Mischens sicherzustellen;
Schritt 2b: Einzufügen von 5 ml Liposom aus der dritten Reagenzglas R3 durch die Mikropumpe P2 in das Reaktionsgefäß in G1, Erhitzen des Reaktionsgefäßes G1 bis etwa 60 ° C und Rühren des Reaktionsgefäßes G1 mit einem Rührwerk, das bei einer Geschwindigkeit von 100 ~ 500 Umdrehungen pro Minute für 30 Minuten rotiert;
Schritt 2c: Nach Beendigung der Reaktion wird das Reaktionsgefäß G1 für ca. 10 Minuten zur Kühlung in Raumtemperaturumgebung gestellt und die 188Re - Liposom-Lösung wird gewonnen;
Schritt 3a: zuerst wird eine 20 ml 0,9% Natriumchloridlösung für Injektionszwecke durch die Mikropumpe P5-P7 zum Waschen der jeweils ersten bis dritten PD-10 Gelfiltrationssäulen C1-C3 verwendet;
Schritt 3b: Zugabe einer gleichen Menge von Rhenium-188-Liposom-Lösung durch Mikropumpen P5-P7 aus dem Reaktionsgefäß G1 zu jeder der PD-10-Gelfiltrationssäulen C1-C3, und nachdem etwa 6 ml der Re-188- Liposom-Lösung aus jeder der PD-10-Gelfiltrationssäulen C1- C3 vollständig abgegeben wurden, dann Zugabe eines gleichen Volumens von 1 ml 0,9% Natriumchloridlösung für Injektionszwecke vom vierten Reagenzglas R4 durch Mikropumpe P5-P7 in jede der PD-10 Gelfiltrationssäulen C1-C3, dann, einer Menge von 3 ml der Natriumchloridlösung ausgesetzt, wird es vollständig als Abfalllösung abgegeben, die Abfalllösung wird durch das sechste Magnetventil V6 in ein Reagenzglas für Abfälle W1 transportiert;
Schritt 3c: Nachdem die Abfalllösung vollständig abgegeben ist, wird eine gleiche Menge von 2,5 ml 0,9% Natriumchloridlösung für Injektionszwecke vom fünften Reagenzglas R5 durch die Mikropumpen P5-P7 zu jeder der PD-10 Gelfiltrationssäulen C1-C3 zugeführt;
Schritt 3d: die abgegebenen etwa 7,5 ml Natriumchloridlösung für Injektionszwecke werden durch das sechste Magnetventil V6 in das Reagenzglas für zeitweilige Aufbewahrung T1 geleitet, um den Prozess der Trennung und Reinigung zu vollenden;
Schritt 4a: Zugabe von 6,5 ml 0,9% Natriumchloridlösung für Injektionszwecke aus dem sechsten Reagenzglas R6 durch Mikropumpe P4 in ein Reagenzglas für zeitweilige Aufbewahrung T1, um mit der in Schritt 3d gewonnenen Lösung gemischt zu werden;
Schritt 4b: Filtern der in Schritt 4a gewonnener Lösung durch Mikropumpe P8 und das Magnetventil V7 und die sterile Membran F1, und dann Einfüllen in eine sterile Glasphiole RL1 als fertiges Produkt Rhenium-188-Liposome.

## Revendications

1. Dispositif de synthèse automatisée pour produire une solution de Re-188-BMEDA, comprenant au moins des éléments constituants: une pluralité de flacons de réactif, des électrovannes à trois voies, des colonnes de filtration sur gel, des micropompes, un flacon de réaction, un flacon de produit en verre stérile, un flacon de stockage temporaire, une membrane de filtration et un flacon de déchets, la pluralité de flacons comprenant un premier flacon de réactif R1 et un second flacon de réactif R2 qui est relié au flacon de réaction G1 par une première micropompe P1, un troisième flacon de réactif R3 et un quatrième flacon de réactif R4 qui est relié au flacon de réaction G1 par une seconde micropompe P2, un cinquième flacon de réactif R5 qui est relié au flacon de réaction G1 par une troisième micropompe P3 et un sixième flacon de réactif R6 qui est relié au flacon de stockage temporaire T1 par une quatrième micropompe P4, le flacon de réaction G1 étant relié aux colonnes de filtration sur gel C1-C3 par les cinquième à septième micropompes P5-P7 et les troisième à cinquième électrovannes V3-V5 respectivement, chacune des colonnes de filtration sur gel C1-C3 étant reliée au flacon de stockage temporaire T1 et au flacon de déchets W1 par une sixième électrovanne V6 et le flacon de stockage temporaire T1 étant relié à une huitième micropompe P8 et ensuite au flacon de déchets W1 et à la membrane de filtration F1 respectivement par une septième électrovanne V7 et la membrane de filtration F1 étant reliée à un flacon de produit en verre stérile RL1.

2. Dispositif de synthèse automatisée pour produire une solution de Re-188-BMEDA selon la revendication 1, chaque élément étant relié à un circuit électrique par un micro-canal et contrôlé avec une puce de programme intégrée par un bouton one touch pour laisser du fluide s'écouler des flacons de réactif dans les flacons de réaction pour une réaction dans une séquence par des électrovannes.

3. Dispositif de synthèse automatisée pour produire une solution de Re-188-BMEDA selon la revendication 1, la première à septième électrovanne étant des électrovannes à trois voies.

4. Dispositif de synthèse automatisée pour produire une solution de Re-188-BMEDA selon la revendication 1, les colonnes de filtration sur gel étant des colonnes PD-10.

5. Procédé d'utilisation le dispositif de synthèse automatisée pour produire une solution de Re-188-BMEDA selon la revendication 1 comprenant les étapes :
Etape 1a: chargement de 77 µl de 0,68M gluconate de sodium contenant 10% de solution d'acide acétique glacial, d'environ 3,08 mg de N,N-bis(2-mercaptoéthyle)-N', N'-diéthyléthylènediamine auquel il est fait référence comme BMEDA et de 74 µl de solution de chorure stanneux (SnCl2) avec 10 mg/ml de rapport de modulation dans le flacon de réaction G1 et suivi par l'addition de nitrogène ou d'hélium dans des trajets de flux de la solution de micropompes pour la régulation de la pression, l'addition de 0,9 ml de solution de Re-188 avec de la radioactivité d'environ 65mCi ~ 470mCi au flacon de réaction G1 du premier flacon de réactif R1 par la micropompe P1 et une réaction ayant lieu à une température d'environ 80°C avec un agitateur qui tourne à une vitesse de 100~500 trs/min pendant 60 minutes pour terminer la réaction dans le flacon de réaction G1 et une réaction de marquage est accomplie avec 1,05 ml de la solution de Re-188 BMEDA obtenue;
Etape 2a : Addition d'hydroxide de sodium du second flacon de réactif R2 au flacon de réaction G1 par la micropompe P1, mélange avec la solution de Re-188 BMEDA obtenue à l'étape 1a et mélange du flacon G1 avec un agitateur qui tourne à une vitesse de 100~500 trs/min pour assurer l'uniformité du mélange ;
Etape 2b : addition de 5 ml de liposome dans le troisième flacon de réactif R3 par la micropompe P2 au flacon de réaction dans G1, chauffage du flacon de réaction G1 à environ 60°C et mélange du flacon de réaction G1 avec un agitateur qui tourne à une vitesse de 100~500 trs/min pendant 30 minutes ;
Etape 2c : après achèvement de la réaction, placement du flacon de réaction G1 dans un environnement à température ambiante pour le refroidir pendant 10 minutes environ et on obtient la solution de liposome Re-188 ;
Etape 3a : première utilisation de 20 ml d'injection de chlorure de sodium 0,9% par la micropompe P5-P7 pour laver respectivement les première à troisième colonnes C1-C3 de filtration sur gel PD-10 ;
Etape 3b : addition d'une quantité égale de solution de liposome Re-188 par les micropompes P5-P7 du flacon de réaction G1 à chacune des colonnes C1-C3 de filtration sur gel PD-10 respectivement et après qu'environ 6 ml de solution de liposome Re-188 soient complètement évacués de chacune des colonnes C1-C3 de filtration sur gel PD-10, addition d'un volume égal de 1 ml d'injection de chlorure de sodium 0,9% du quatrième flacon de réactif R4 par la micropompe P5-P7 à respectivement chacune des colonnes C1-C3 de filtration sur gel PD-10, ensuite exposition à une quantité de 3 ml de solution de chlorure de sodium et évacuation complète comme solution de déchet, transport de la solution de déchet dans le flacon de déchets W1 par la sixième électrovanne V6 ;
Etape 3c: après que la solution de déchet ait été complètement évacuée, addition d'un volume égal de 2,5 ml d'injection de chlorure de sodium 0,9% du cinquième flacon de réactif R5 par les micropompes P5-P7 à respectivement chacune des colonnes C1-C3 de filtration sur gel PD-10 ;
Etape 3d : transport de la solution évacuée d'environ 7,5 ml d'injection de chlorure de sodium par la sixième électrovanne V6 dans le flacon de stockage temporaire T1 pour terminer le processus de séparation et de purification ;
Etape 4a : addition de 6,5 ml d'injection de chlorure de sodium du sixième flacon de réactif R6 par la micropompe P4 à un flacon de stockage temporaire T1 pour mélanger avec la solution obtenue à l'étape 3d ;
Etape 4b : filtration de la solution obtenue à l'étape 4a par la micropompe P8 et l'électrovanne V7 et la membrane stérile F1 et ensuite remplissage dans un flacon en verre stérile RL1 en tant que produit fini de Re-188-liposome.
